# EUROPÄISCHE PATENTSCHRIFT

(11) **EP 3 295 011 B1**
(45) Veröffentlichungstag und Bekanntmachung des Hinweises auf die Patenterteilung: **28.04.2021**
(21) Anmeldenummer: 16725236.0
(22) Anmeldetag: 10.05.2016
(51) Int. Cl.: F02K 7/06, F02C 5/02, F02C 5/12, F23R 7/00, F01D 25/36, F02C 1/04, F02C 3/10

(54) **TURBINE UND VERFAHREN ZUM BETREIBEN DERSELBEN**
TURBINE AND METHOD FOR OPERATING THE SAME
TURBINE ET SON PROCÉDÉ DE FONCTIONNEMENT

(30) Priorität: 11.05.2015 CH 6432015
(43) Veröffentlichungstag der Anmeldung: 21.03.2018
(73) Patentinhaber: Devcon Engineering Gerhard Schober, 9490 Vaduz (LI)
(72) Erfinder: SCHOBER, Werner, 8141 Unterpremstäten-Zettling (AT); SCHOBER, Gerhard, 9492 Eschen (LI)
(74) Vertreter: Patentbüro Paul Rosenich AG
(86) Internationale Anmeldenummer: PCT/IB2016/052669
(87) Internationale Veröffentlichungsnummer: WO 2016/181307

(56) Entgegenhaltungen:
- WO-A1-03/095814
- US-A1- 2002 139 106
- US-A1- 2003 010 014
- US-A1- 2004 148 922
- US-A1- 2004 154 306
- US-A1- 2007 144 179
- US-A1- 2009 102 203

## Beschreibung

Die Erfindung betrifft eine Verbrennungsgasturbine, die einen Highspeed-Generator zur Stromerzeugung antreibt.
Gasturbinen zur Stromerzeugung oder Krafterzeugung sind bekannt. So zeigt die EP0462458B1 eine Gasturbine einer Krafterzeugungsmaschine, die einen Verdichter, eine stromab des Verdichters angeordnete Brennkammer umfasst, wobei die Turbine stromab der Brennkammer vorgesehen ist. Die Turbine und der Verdichter sind durch eine gemeinsame Welle verbunden. Es kommt ein Luft-Wasser-Wärmetauscher zum Einsatz, bei dem die Abgaswärme der Turbine zur Dampferzeugung verwendet wird.
Eine Rückführung der Abgase über Luft-Luft-Querstromwärmetauscher ist ebenfalls bekannt, wobei verdichtete Luft über den Wärmetauscher dem Brennraum einer Brennkammer zugeführt wird. Eine vollständige Wärmeübertragung im Wärmetauscher ist jedoch nicht gegeben.
Bei einer Gasturbine mit einem Verdichter für Luft gemäss EP1270874B1 sind mehrere, strömungstechnisch parallel geschaltete Brennkammern vorgesehen, in denen Luft aufgeheizt wird und über einen Überleitkanal einem Gaskanal der Turbine zuströmt.
In der AT506592A4 ist eine Verbrennungsturbine mit diskontinuierlicher Verbrennung beschrieben, die eine, mit einer Zündvorrichtung versehene Brennkammer aufweist, wobei stromab der Brennkammer eine Turbine angeordnet ist, die durch ein in der Brennkammer erhaltenes Arbeitsgas beaufschlagbar ist. Die Brennkammer ist um die Drehachse der Turbine angeordnet. Zwischen der Brennkammer und der Turbine ist eine Durchströmkammer angeordnet, die von der Brennkammer durch eine Strömungsplatte oder durch eine weitere Turbine abgegrenzt ist. Durch Ventile in der Durchströmkammer ist die Luft getaktet zuführbar.
Die US2004154306A offenbart eine Verbundgasturbine mit einem Verdichter und einer Turbine, die in einer Achse angeordnet sind. Die Verbundgasturbine soll im Betrieb einen höheren Druck und eine höhere Betriebstemperatur ermöglichen, wozu in den Brennkammern phasenverschoben Zyklen erzeugt werden sollen. Ein Teil der Brenngase einer Brennkammer soll der nächsten zugeführt werden, so dass eine Mischladung in der nächsten Brennkammer gebildet wird. Dieser Transfer eines Teils der Brenngase soll reihum vorgenommen werden, woraus dann eine höhere Turbinenleistung resultieren soll.
Weitere Gasturbinen, bei den Verdichter und Turbine auf bzw. in einer Achse angeordnet sind, offenbaren zum Beispiel die US2003010014A, US2002139106A und die WO03095814A.
Die Aufgabe der Erfindung besteht darin, eine Turbine, die wiederum einen Highspeed-Generator zur Stromerzeugung antreibt, zu schaffen, die einen höheren Wirkungsgrad aufweist und die im Vergleich zum Stand der Technik einfacher und variabler aufgebaut ist.

Die Aufgabe ist mit den Merkmalen des Patentanspruchs 1 und den Verfahrensschritten des Anspruchs 12 gelöst.

Gemäss der Erfindung ist der Turbine mindestens ein externer Verdichter zugeordnet, der mit einem eigenen Elektroantrieb versehen ist und der nicht durch eine Antriebswelle oder dergleichen mit der Turbine verbunden ist. Es sind mindestens zwei Brennkammern für eine diskontinuierliche, gepulste Verbrennung resp. Beaufschlagung der Turbine angeordnet. Der mindestens eine externe Verdichter ist als zweistufiger Doppelverdichter zum Beaufschlagen des Turbinenrad resp. der Brennkammer mit zwei getrennten Verdichter-Luftströmen ausgebildet. Alternativ ist ein zweiter externer Verdichter zum Beaufschlagen des Turbinenrads mit einem Verdichter-Luftstrom vorgesehen.

Die Turbine kann eine Axial-Verbrennungsgasturbine oder auch eine Radial-Verbrennungsgasturbine sein.

Bevorzugte Ausgestaltungen der Erfindung sind in den abhängigen Ansprüchen offenbart.

Die mehreren Brennkammern sind so angeordnet, dass ihre Ausströmdüsen direkt auf das Turbinenrad gerichtet sind, was einen Düseneffekt der Verbrennung ergibt. Jede Brennkammer ist mit einer Kraftstoffeinspritzung, einer Zündvorrichtung und einer Ausströmdüse versehen. In die Brennkammer wird ein Kraftstoff gasförmig oder flüssig eingespritzt und mittels der Zündvorrichtung zur Explosion gebracht. Dadurch wird eine annähernd isochore Verbrennung erreicht (isochor verlangt, dass das Volumen konstant ist). Die Düse am Ausgang der Brennkammer wandelt den erzeugten Druck in eine Strömungsgeschwindigkeit um, mit der die Turbine beaufschlagt wird. Die Brennkammern werden nacheinander zur Zündung gebracht.

Bevorzugt sind mindestens zwei oder mehr, zum Beispiel bis zu sechs oder auch noch mehr Brennkammern anordenbar. Weiterhin bevorzugt sind die Brennkammern gleichmässig voneinander beabstandet auf dem Umfang der Turbine angeordnet.

Zur Leistungsregelung der Turbine ist die Frequenz der Zündfolge mittels einer elektronischen Steuerung einstell- und regelbar.

Vorzugsweise ist der Elektroantrieb ein regelbarer Highspeed-Elektroantrieb.

Es kann ein zweiter externer Verdichter vorgesehen sein, der ebenfalls mit einem eigenen regelbaren Highspeed-Elektroantrieb versehen ist. Alternativ kann der zweite externe Verdichter auch mit dem regelbaren Highspeed-Elektroantrieb des ersten Verdichters verbunden sein.

Weiterhin sind die Verdichterströme der Verdichter vorzugsweise über eine geteilte Leiteinrichtung unabhängig voneinander der Turbine zuführbar.

Durch den resp. die externen Verdichter kann die Turbine mit der Verdichterluft gestartet werden, und die Drehzahl der Turbine effizient beeinflusst und begrenzt werden. Der Verdichter kann auch als ein Doppelverdichter ausgebildet sein.

Vorteilhaft ist die Turbine mit einem Gegenstrom-Wärmetauscher verbindbar, durch den der Abgasstrom der Turbine geleitet werden kann. Der Gegenstrom-Wärmetauscher ist mit dem zweiten externen Verdichter dergestalt verbindbar, dass die Wärmeenergie des Abgasstroms auf die Verdichterluft des zweiten Verdichters übertragen werden kann.

Zur Steigerung des Turbinenwirkungsgrades wird mit dem zweiten Verdichter, der entweder an den ersten Verdichter gekoppelt oder mit einem eigenen elektrischen, regelbaren Highspeed-Antrieb versehen ist, über einen Gegenstrom-Wärmetauscher die thermische Energie des Abgasstromes direkt in die Turbine rückgeführt. Die Rückführung des Abgasstromes in die Turbine wird bevorzugt durch eine strömungstechnisch geteilte Leiteinrichtung vor dem Turbinenrad ermöglicht. Das Turbinenrad wird vorteilhaft durch zwei getrennte Verdichter-Luftströme beaufschlagt. Dem Luftstrom aus dem ersten Verdichter wird die Verbrennungsenergie zugeführt und dem Luftstrom aus dem zweiten Verdichter wird die Energie aus dem Abgasstrom zugeführt. Die Wärmeenergie aus dem Abgasstrom wird über den Wärmetauscher auf die Verdichterluft des zweiten Verdichters übertragen und der Turbine zugeführt.

Highspeed im Sinne der Erfindung betrifft Drehzahlen ab ca. 10'000 U/min. Erfindungsgemäss kann die Generatordrehzahl ca. 50'000 U/min oder mehr betragen. Je höher die Umdrehungsgeschwindigkeit, desto kleiner kann der Generator ausgelegt sein.

Die erfindungsgemässe Turbine kann nach einer Wirkungsgradkennlinie mittels einer Steuereinheit gesteuert werden. Durch die unabhängige Regelbarkeit der Verdichter, der Puls-Intensität der Verbrennung, die Rückmeldung von Daten des Wärmetauschers und die Leistungsabnahme von Verbrauchern ist eine Steuerung der Turbine nach einer Wirkungsgradkennlinie möglich. Dies ermöglicht einen optimalen Betrieb der Turbine. Sie ist, im Vergleich zum Stand der Technik, viel länger und effizient in unterschiedlichen Lastbereichen betreibbar, was einen geringeren Kraftstoffverbrauch und geringere Emissionen zur Folge hat.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
Fig. 1 eine erste Ausführungsform einer erfindungsgemässen Turbine,
Fig. 2 eine zweite Ausführungsform der erfindungsgemässen Turbine,
Fig. 3 eine Brennkammer der erfindungsgemässen Turbine, und
Fig. 4 eine Leiteinrichtung für die Verdichterluft.

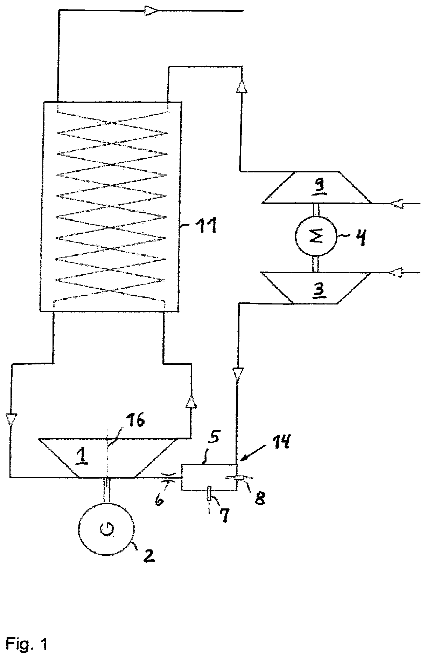

Fig. 1 zeigt eine erfindungsgemässe Turbine am Beispiel einer Axial-Verbrennungsgasturbine 1 zum Antrieb eines Highspeed-Generators 2, mit zwei externen Verdichtern 3, 9. Die Verdichter 3, 9 sind nicht durch eine Welle oder dergleichen mit der Axial-Verbrennungsgasturbine 1 verbunden, sondern mit einem eigenen, regelbaren Highspeed-Elektroantrieb 4 versehen.

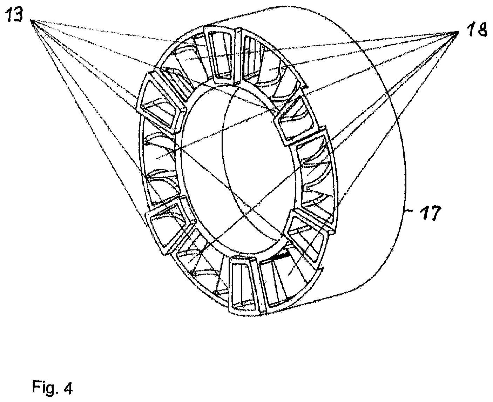

Ein weiteres Merkmal ist die nicht-kontinuierliche Verbrennung mittels mehrerer Brennkammern 5, die so angeordnet sind, dass ihre Ausströmdüsen 6 direkt auf das Turbinenrad 12 gerichtet sind, d. h. die Turbinenschaufeln des Turbinenrads 12 werden parallel zur Drehachse 16 beaufschlagt. Angeordnet sind mindestens zwei Brennkammern 5, bevorzugt im ausgeführten Beispiel jedoch sechs Brennkammern 5, die gleichmässig voneinander beabstandet auf dem Umfang der Axial-Verbrennungsgasturbine 1 angeordnet sind (Fig. 4).

Jede Brennkammer 5 ist mit einer Kraftstoffeinspritzung 7, einer Zündvorrichtung 8 und einer Ausströmdüse 6 versehen. In die Brennkammer 5 wird Kraftstoff gasförmig oder flüssig eingespritzt und mittels der Zündvorrichtung 8 zur Explosion gebracht. Dadurch wird eine annähernd isochore Verbrennung erreicht. Die Ausströmdüse 6 am Ausgang der Brennkammer 5 "wandelt" den erzeugten Druck in eine Strömungsgeschwindigkeit um, mit der das Turbinenrad 12 beaufschlagt wird.

Die Brennkammern 5 werden mittels einer nicht explizit dargestellten Steuerung nacheinander zur Zündung gebracht. Zur Leistungsregelung der Axial-Verbrennungsgasturbine 1 ist die Frequenz der Zündfolge mittels der elektronischen Steuerung einstell- und regelbar.

Zur Steigerung des Turbinenwirkungsgrades wird mit dem zweiten Verdichter 9, der an den ersten Verdichter 3 gekoppelt ist, über einen Gegenstrom-Wärmetauscher 11 die thermische Energie des Abgasstromes direkt in die Axial-Verbrennungsgasturbine 1 zurückgeführt. Die Rückführung in die Axial-Verbrennungsgasturbine 1 wird durch eine strömungstechnisch geteilte Leiteinrichtung 17 vor dem Turbinenrad 12 ermöglicht.

Das Turbinenrad 12 wird durch zwei getrennte Verdichter-Luftströme beaufschlagt. Dem Luftstrom aus dem ersten Verdichter 3 wird die Verbrennungsenergie zugeführt und dem Luftstrom aus dem zweiten Verdichter 9 wird die Energie aus dem Abgasstrom zugeführt. Die Wärmeenergie aus dem Abgasstrom wird über den Gegenstrom-Wärmetauscher 11 auf die Verdichterluft des zweiten Verdichters 9 übertragen und der Axial-Verbrennungsgasturbine 1 zugeführt.

Rohrleitungen für strömende Gase sind vereinfacht und unter Angabe der Strömungsrichtung (Pfeilrichtung) dargestellt.

Für die Nutzung der Abgaswärme ist der zweite Verdichter 9 notwendig. Es ist aber auch vorstellbar, dass die Verdichterluft von einem Verdichter geteilt wird. Es gibt auch 2-stufige Verdichter. Die getrennten Verdichter Antriebe sind eine bevorzugte Variante, da dadurch eine effiziente Steuerung der Turbine möglich ist.

Eine Axial-Verbrennungsgasturbine 1 mit externem Verdichter ist aus dem Stand der Technik nicht bekannt. Durch den oder die externen Verdichter 3, 9 kann die Axial-Verbrennungsgasturbine 1 mit der Verdichterluft gestartet werden und die Drehzahl der Axial-Verbrennungsgasturbine 1 kann effizient beeinflusst und begrenzt werden.

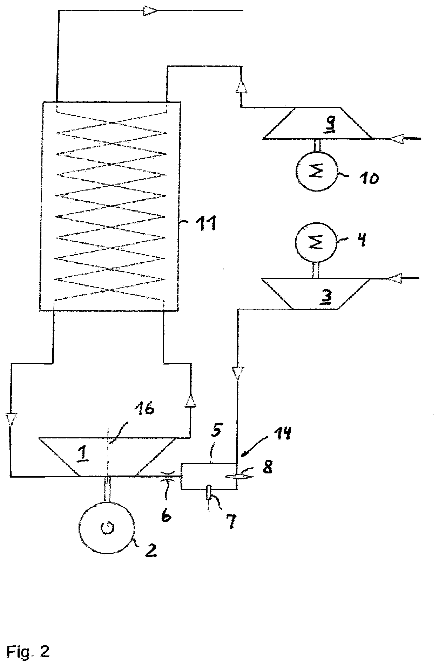

Fig. 2 stellt im Unterschied zur ersten Ausführungsform nach Fig. 1 eine Variante dar, bei der der zweite externe Verdichter 9 mit einem eigenen regelbaren Highspeed-Elektroantrieb 10 versehen ist. Die getrennten Verdichter-Antriebe stellen eine bevorzugte Variante dar, da dadurch eine effizientere Steuerung der Axial-Verbrennungsgasturbine 1 möglich ist.

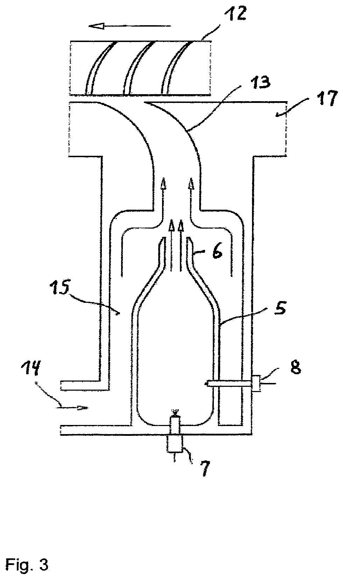

In Fig. 3 sind Details der Brennkammer 5 und eine sie umgebende Leiteinrichtung 17 dargestellt. Die Brennkammer 5 ist hierbei in eine Vorkammer 15 integriert. Die Verdichterluft 14 strömt permanent durch die Vorkammer 15 und treibt das Turbinenrad 12 an. In die Brennkammer 5 wird Kraftstoff über die Kraftstoffdüse 8 eingespritzt und durch die Zündvorrichtung 7 zur Explosion gebracht. Die Expansion entlädt sich durch die Ausströmdüse 6 direkt in einen Kanal 13 (Düseneffekt) der Leiteinrichtung 17 und treibt zusätzlich das Turbinenrad 12 an.

Bei der erfindungsgemässen Axial-Verbrennungsgasturbine 1 sind die mehreren Brennkammern 5 so angeordnet, dass sie nacheinander immer in der gleichen Reihenfolge, in einstellbaren Zeitabständen zur Zündung gebracht werden. Die Abläufe in der Brennkammer, wie die Einspritzmenge und der Zündzeitpunkt sind variabel steuerbar. Auch die Zeitabstände zwischen den Zündungen der einzelnen Brennkammern sind variabel steuerbar. Über die variable Einspritzmenge und die Brennkammerzündfolge wird die Leistung der Turbine geregelt.

Wie aus der Fig. 3 ersichtlich ist, sind keine Absicherungen gegen einen Rückschlag von Luft oder Verbrennungsgas vorgesehen und auch nicht notwendig. Jede Brennkammer 5 wird ständig mit der Luft aus dem ersten Verdichter 3 umströmt und der Expansionsdruck der Verbrennungsgase der Brennkammer 5 wird durch die Ausströmdüse 6 in Strömungsgeschwindigkeit gewandelt.

Gestartet wird die erfindungsgemässe Axial-Verbrennungsgasturbine 1 primär durch die Verdichterluft. Die Verdichter 3, 9 sind so ausgelegt, dass die Nenndrehzahl der Axial-Verbrennungsgasturbine 1 durch die Verdichter 3, 9 erreicht wird. Zusätzlich kann, z. B. zur Unterstützung des Anlaufs der Axial-Verbrennungsgasturbine 1, diese durch den als Motor betriebenen Highspeed-Generator 2 gestartet werden. Die Kraftstoffverbrennung ist nur für den Betrieb der Axial-Verbrennungsgasturbine 1 erforderlich.

Die Fig. 4 zeigt eine Leiteinrichtung 17, bei der die Verdichterluft und auch die Verbrennungsgase über die Leitschaufeln 18 dem Turbinenrad 12, das hinter der Leiteinrichtung 17 angeordnet ist, zugeführt werden. Die Verdichterluft aus dem zweiten Verdichter 9 wird über die Leitschaufeln 18 dem Turbinenrad 12 zugeführt. Die dargestellten Bereiche der Leiteinrichtung 17 sind strömungstechnisch komplett getrennt. Bei der Leiteinrichtung 17 sind im Beispiel sechs Brennkammern 5 vorgesehen, d. h. dass die Verdichterluft nur über die sechs Brennkammern 5 und deren Vorkammern 15 in die Leitschaufeln 18 einströmt und das Turbinenrad 12 beaufschlagt.

Grundsätzlich gelten für beide Verdichterkreise die gleichen thermodynamischen Bedingungen. Der Druck, der vom Verdichter 3, 9 erzeugt wird, bleibt konstant, nur das Volumen vergrössert sich durch die Erwärmung. Das Fluid entspannt sich über die Axial-Verbrennungsturbine 1, wodurch ein Druckanstieg nicht möglich ist. Die unabhängigen Verdichterkreise (Kompressorkreise) funktionieren gleich, nur die jeweilige Wärmequelle ist eine andere.

Wichtig ist, dass die beiden Verdichterkreise getrennt der Axial-Verbrennungsgasturbine 1 zugeführt werden, um gegenseitige Beeinflussungen zu meiden.

So wird im zweiten Antriebsstrang verhindert, dass die durch den Gegenstrom-Wärmetauscher 11 eingebrachte Wärme nicht auch zu einer Expansion in der Druckleitung führt, die sich bremsend auf den Verdichter 9 des zweiten Antriebsstrangs auswirken könnte.

Für den Highspeed-Generator 2 und die Highspeed-Antriebe 4, 10 kommt ein für diese Anwendung entwickelter Inverter zum Einsatz, der den hochfrequenten Generatorstrom, über einen Zwischenkreis die Highspeed-Antriebe 4, 10 und die Turbinensteuerung versorgt und den Reststrom in eine Verbraucherspannung umwandelt.

Zur Regelung der Axial-Verbrennungsgasturbine 1 kommt eine elektronische Steuerung zum Einsatz, die über Sensoren für Temperatur, Druck und Drehzahl und den Daten aus dem Inverter die optimale Leistung errechnet.

Bei Turbinen, die High-Speed-Antriebe verwenden, ist ein Inverter notwendig. Da durch die hohe Drehzahl des Generators eine hochfrequente Hochspannung entsteht, muss diese in eine niederfrequente Verbraucherspannung gewandelt werden. Das geschieht mit einem Inverter. Da für den Antrieb der Verdichter 3, 9 erfindungsgemässe Highspeed-Antriebe verwendet werden, ist es nicht sinnvoll, handelsübliche Inverter einzusetzen, die die Verbraucherspannung in eine hochfrequente Spannung wandeln. Daher ist ein Inverter mit einem sogenannten Zwischenkreis für die Highspeed-Antriebe 4, 10 vorgesehen. Durch den erfindungsgemässen Inverter ist es möglich, die hochfrequente Spannung unmittelbar vom Generator 2 zu nutzen.

Der Wirkungsgrad der erfindungsgemässen Turbine ist gegenüber vorbekannten Lösungen massgeblich gesteigert.

### Bezugszeichenliste

1 Axial-Verbrennungsgasturbine
2 Highspeed-Generator
3 Verdichter
4 Highspeed-Elektroantrieb
5 Brennkammer
6 Ausströmdüse
7 Kraftstoffeinspritzung
8 Zündvorrichtung
9 Verdichter
10 Highspeed-Elektroantrieb
11 Gegenstrom-Wärmetauscher
12 Turbinenrad
13 Kanal
14 Verdichterluft
15 Vorkammer
16 Drehachse
17 Leiteinrichtung
18 Leitschaufeln

## Patentansprüche

1. Verbrennungsgasturbine (1) mit einem Turbinenrad (12), die wenigstens eine, mit einer Kraftstoffeinspritzung (7) und einer Zündvorrichtung (8) versehene Brennkammer (5) aufweist, die das Turbinenrad (12) der Verbrennungsgasturbine (1) mit einem Verbrennungsgas beaufschlagt, um einen Highspeed-Generator (2) zwecks Stromerzeugung anzutreiben, wobei der Verbrennungsgasturbine (1) resp. der Brennkammer (5) mindestens ein externer Verdichter (3) zum Zuführen von Verdichterluft (14) zur wenigsten einen Brennkammer (5) zugeordnet ist, wobei der mindestens eine externe Verdichter (3) mit einem eigenen Elektroantrieb (4) versehen ist und der mindestens eine externe Verdichter (3) nicht durch eine Antriebswelle mit der Verbrennungsgasturbine (1) verbunden ist, **dadurch gekennzeichnet, dass** der mindestens eine externe Verdichter (3) als zweistufiger Doppelverdichter zum Beaufschlagen des Turbinenrad (12) resp. der Brennkammer (5) mit zwei getrennten Verdichter-Luftströmen ausgebildet ist, oder ein zweiter externer Verdichter (9) zum Beaufschlagen des Turbinenrads (12) mit einem Verdichter-Luftstrom vorgesehen ist, und **dass** mindestens zwei Brennkammern (5) für eine diskontinuierliche, gepulste Verbrennung resp. Beaufschlagung der Verbrennungsgasturbine vorgesehen sind.

2. Verbrennungsgasturbine nach Anspruch 1, **dadurch gekennzeichnet, dass** der Elektroantrieb (4) ein regelbarer Highspeed-Elektroantrieb ist.

3. Verbrennungsgasturbine nach Anspruch 1 oder 2, **dadurch gekennzeichnet, dass** bevorzugt bis zu sechs Brennkammern (5) angeordnet sind.

4. Verbrennungsgasturbine nach einem der Ansprüche 1 bis 3, **dadurch gekennzeichnet, dass** die Brennkammern (5) bevorzugt gleichmässig voneinander beabstandet auf dem Umfang der Verbrennungsgasturbine (1) angeordnet sind.

5. Verbrennungsgasturbine nach einem der Ansprüche 1 bis 4, **dadurch gekennzeichnet, dass** der zweite externe Verdichter (9) mit einem eigenen regelbaren Highspeed-Elektroantrieb (10) versehen ist.

6. Verbrennungsgasturbine nach einem der Ansprüche 1 bis 5, **dadurch gekennzeichnet, dass** der Verdichterstrom der/des Verdichter(s) (3, 9) über eine geteilte Leiteinrichtung (17) unabhängig voneinander dem Laufrad der Verbrennungsgasturbine zuführbar sind.

7. Verbrennungsgasturbine nach einem der Ansprüche 1 bis 6, **dadurch gekennzeichnet, dass** die Verbrennungsgasturbine (1) mit einem Gegenstrom-Wärmetauscher (11) verbunden ist, durch den der Abgasstrom der Verbrennungsgasturbine (1) geleitet wird.

8. Verbrennungsgasturbine nach Anspruch 7, **dadurch gekennzeichnet, dass** der Gegenstrom-Wärmetauscher (11) mit dem zweiten externen Verdichter (9) dergestalt verbunden ist, dass im Verdichterbetrieb die Wärmeenergie des Abgasstroms auf die Verdichterluft des zweiten Verdichters (9) übertragen wird.

9. Verbrennungsgasturbine nach einem der Ansprüche 1 bis 8, **dadurch gekennzeichnet, dass** der zweite externe Verdichter (9) mit dem regelbaren Highspeed-Elektroantrieb (4) des ersten Verdichters (3) verbunden ist.

10. Verbrennungsgasturbine nach einem der Ansprüche 2 bis 9, **dadurch gekennzeichnet, dass** zur Steuerung oder Regelung des Highspeed-Elektroantriebs (4, 10) ein Inverter mit einem Zwischenkreis vorgesehen ist.

11. Verbrennungsgasturbine nach einem der Ansprüche 1 bis 10, **dadurch gekennzeichnet, dass** die Verdichter (3, 9) mittels einer Steuereinheit unabhängig voneinander regelbar ausgestaltet sind und eine Steuerung der Verbrennungsgasturbine nach einer Wirkungsgradkennlinie erfolgt.

12. Verfahren zum Betrieb einer Verbrennungsgasturbine nach einem der Ansprüche 1 bis 11 mittels gepulster und annähernd isochorer Verbrennung eines Kraftstoffs in Brennkammern (5) in einstellbaren Zeitabständen, wobei ein Turbinenrad (12) der Verbrennungsgasturbine durch zwei getrennte Verdichter-Luftströme beaufschlagt wird und thermische Energie des Abgasstromes direkt in die Verbrennungsgasturbine rückgeführt wird und die Steuerung der Verbrennungsgasturbine nach einer Wirkungsgradkennlinie erfolgt.

## Claims

1. Combustion gas turbine (1) with a turbine wheel (12) which has at least one combustion chamber (5) equipped with a fuel injection means (7) and an ignition apparatus (8), which supplies the turbine wheel (12) of the combustion gas turbine (1) with a combustion gas to drive a high-speed generator (2) for the purpose of generating electricity, wherein at least one external compressor (3) is assigned to the combustion gas turbine (1) and the combustion chamber (5) for delivering compressor air (14) to the at least one combustion chamber (5), wherein the at least one external compressor (3) is equipped with its own electric drive (4) and the at least one external compressor (3) is not connected to the combustion gas turbine (1) via drive shaft, **characterized in that** the at least one external compressor (3) is designed as a two-stage dual compressor for supplying the turbine wheel (12) and the combustion chamber (5) with two separate streams of compressor air, or a second external compressor (9) is proved to supply the turbine wheel (12) with one stream of compressor air, and **that** at least two combustion chambers (5) are provided for a discontinuous, pulsed combustion and/or supply to the combustion gas turbine.

2. Combustion gas turbine according to Claim 1, **characterized in that** the electric drive (4) is a controllable high-speed electric drive.

3. Combustion gas turbine according to Claim 1 or 2, **characterized in that** preferably up to six combustion chambers (5) are arranged.

4. Combustion gas turbine according to any one of claims 1 to 3, **characterized in that** the combustion chambers (5) are preferably arranged with equal spacing from each other on the circumference of the combustion gas turbine (1).

5. Combustion gas turbine according to any one of claims 1 to 4, **characterized in that** the second external compressor (9) is provided with its own controllable high-speed electric drive (10).

6. Combustion gas turbine according to any one of claims 1 to 5, **characterized in that** the compressor flows from the one or more compressor(s) (3, 9) can be fed to the impeller of the combustion gas turbine independently of each other via a split guide duct (17).

7. Combustion gas turbine according to any one of claims 1 to 6, **characterized in that** the combustion gas turbine (1) is connected to a counterflow heat exchanger (11), through which the exhaust gas flow of the combustion gas turbine (1) is passed.

8. Combustion gas turbine according to Claim 7, **characterized in that** the counterflow heat exchanger (11) is connected to the second external compressor (9) in such a way that when the compressor is running the heat energy of the exhaust gas stream is transferred to the compressor air of the second compressor (9).

9. Combustion gas turbine according to any one of claims 1 to 8, **characterized in that** the second external compressor (9) is connected to the controllable high-speed electric drive (4) of the first compressor (3).

10. Combustion gas turbine according to any one of claims 2 to 9, **characterized in that** an inverter with an intermediate circuit is provided in order to control or regulate the high-speed electric drive (4, 10).

11. Combustion gas turbine according to any one of Claims 1 to 10, **characterized in that** the compressors (3, 9) are designed such that they can be regulated independently of each other by means of a control unit, and control of the combustion gas turbine is carried out in accordance with an efficiency characteristic curve.

12. Method for operating a combustion gas turbine according to any one of claims 1 to 11 using a pulsed and almost isochoric process for combusting a fuel in combustion chambers (5) at adjustable time intervals, wherein two separate streams of compressor air are supplied to a turbine wheel (12) of the combustion gas turbine, and thermal energy from the discharge gas flow is returned directly into the combustion gas turbine, and the control of the combustion gas turbine is carried out in accordance with an efficiency characteristic curve.

## Revendications

1. Turbine à gaz de combustion (1) avec une roue de turbine (12), qui comporte au moins une chambre de combustion (5) munie d'une injection de carburant (7) et d'un dispositif d'allumage (8), qui sollicite la roue de turbine (12) de la turbine à gaz de combustion (1) avec un gaz de combustion pour entraîner un générateur à haute vitesse (2) dans le but de produire du courant, sachant qu'un compresseur externe (3) est attribué à la turbine à gaz de combustion (1) et respectivement à la chambre de combustion (5) pour acheminer de l'air du compresseur (14) vers au moins une chambre de combustion (5), sachant qu'au moins un compresseur externe (3) est muni d'un entraînement électrique propre (4) et qu'au moins un compresseur externe (3) n'est pas relié par un arbre d'entraînement à la turbine à gaz de combustion (1), **caractérisée en ce qu'**au moins un compresseur externe (3) est constitué en tant que compresseur double bi-étagé pour solliciter la roue de turbine (12) et respectivement la chambre de combustion (5) avec deux flux d'air de compresseur séparés ou un deuxième compresseur externe (9) est prévu pour solliciter la roue de turbine (12) avec un flux d'air de compresseur et **en ce qu**'au moins deux chambres de combustion (5) sont prévues pour une combustion ou une sollicitation discontinue, pulsée de la turbine à gaz de combustion.

2. Turbine à gaz de combustion selon la revendication 1, **caractérisée en ce que** l'entraînement électrique (4) est un système d'entraînement électrique à haute vitesse réglable.

3. Turbine à gaz de combustion selon la revendication 1 ou 2, **caractérisée en ce que** jusqu'à six chambres de combustion (5) sont de préférence montées.

4. Turbine à gaz de combustion selon l'une quelconque des revendications 1 à 3, **caractérisée en ce que** les chambres de combustion (5) sont disposées de préférence uniformément à distance l'une de l'autre sur la périphérie de la turbine de gaz de combustion (1).

5. Turbine à gaz de combustion selon l'une quelconque des revendications 1 à 4, **caractérisée en ce que** le deuxième compresseur externe (9) est muni d'un entraînement électrique à haute vitesse réglable propre (10).

6. Turbine à gaz de combustion selon l'une quelconque des revendications 1 à 5, **caractérisée en ce que** le flux de compression des/du compresseur (s) (3, 9) peut/peuvent être acheminé (s) à la roue de la turbine à gaz de combustion indépendamment l'un de l'autre par le biais d'un système conducteur séparé (17).

7. Turbine à gaz de combustion selon l'une quelconque des revendications 1 à 6, **caractérisée en ce que** la turbine de gaz de combustion (1) est reliée à un échangeur de chaleur à contre-courant (11) à travers lequel le flux des gaz d'échappement de la turbine de gaz de combustion (1) est dirigé.

8. Turbine à gaz de combustion selon la revendication 7, **caractérisée en ce que** l'échangeur de chaleur à contre-courant (11) est relié au deuxième compresseur externe (9) de telle manière que pendant le fonctionnement du compresseur, l'énergie thermique du flux des gaz d'échappement est transmise à l'air de compression du deuxième compresseur (9).

9. Turbine à gaz de combustion selon l'une quelconque des revendications 1 à 8, **caractérisée en ce que** le deuxième compresseur externe (9) est relié à l'entraînement électrique à haute vitesse réglable (4) du premier compresseur (3).

10. Turbine à gaz de combustion selon l'une quelconque des revendications 2 à 9, **caractérisée en ce qu'**un inverseur avec un circuit intermédiaire est prévu pour la commande et le réglage de l'entraînement électrique à haute vitesse (4, 10).

11. Turbine à gaz de combustion selon l'une quelconque des revendications 1 à 10, **caractérisée en ce que** les compresseurs (3, 9) sont constitués réglables indépendamment l'un de l'autre au moyen d'une unité de commande et qu'une commande de la turbine de gaz de combustion a lieu selon une caractéristique de rendement.

12. Procédé pour faire fonctionner une turbine à gaz de combustion selon l'une quelconque des revendications 1 à 11 au moyen d'une combustion pulsée et isochore d'un carburant dans des chambres de combustion (5) à des intervalles de temps réglables, sachant qu'une roue de turbine (12) de la turbine à gaz de combustion est sollicitée par deux flux d'air de compresseur séparés et que l'énergie thermique du flux des gaz d'échappement est directement redirigée dans la turbine de gaz de combustion et la commande de la turbine de gaz de combustion a lieu selon une caractéristique de rendement.
